# EUROPEAN PATENT APPLICATION

(11) **EP 3 211 529 A1**
(43) Date of publication of application: **30.08.2017**
(21) Application number: 17151581.0
(22) Date of filing: 16.01.2017
(51) Int. Cl.: G06F 9/445

(54) **AUTOMATIC SOFTWARE GATHERING DEVICE AND METHOD**

(30) Priority: 22.02.2016 JP 2016030938
(71) Applicant: FUJITSU LIMITED, Kawasaki-shi Kanagawa 211-8588 (JP)
(72) Inventor: Imataki, Takamoto, Kanagawa, 211-8588 (JP)
(74) Representative: Hoffmann Eitle

(57) **Abstract**

An automatic software gathering device includes a processor that executes a process. The process includes receiving setup order information related to a specific system construction, identifying respective software items of a setup target included in the setup order information, referencing a first storage section storing software and storage areas, accessing a storage area of each identified software item of the setup target, gathering each software item of the setup target, and storing each of the gathered software items in a second storage section as a software group employed during the specific system construction.

## Description

The embodiments discussed herein are related to an automatic software gathering program, an automatic software gathering device, and an automatic software gathering method.

### BACKGROUND

Hitherto, technology has been proposed to assist operations and protection of software and data employed by respective devices configuring a network system from a remote site. In such technology, distribution operations such as installation or upgrading of software and data employed by the respective devices configuring the network, and management of licenses for the employed software, are performed from a remote site through public wiring or the like.

### Related Patent Documents

Japanese Laid-Open Patent Publication No. H08-137768

Conventionally, when constructing a system, for example, an operator constructing the system gathers software needed by the system and installs the gathered software to a target machine on which the system is to run or uploads the gathered software to a cloud environment. In cases in which the system to be constructed is a large scale system such as a business system, the system will need many different types of software. A high operating cost is entailed when the operator gathers these many different types of software individually.

It is therefore conceivable that software needed in system construction will be employed as an integrated product predetermined by a provider of software products. However, customers have a diverse range of particular needs with respect to system construction, and it is conceivable that, in many cases, a system corresponding to the needs of a customer will not be constructible using integrated products that have predetermined software.

### SUMMARY

One aspect of technology disclosed herein has an object of improving efficiency of software gathering used in system construction.

According to an aspect of the embodiments, a non-transitory recording medium stores an automatic software gathering program that accords with a setup order, and that is executable to cause a computer to perform a process. The process includes: receiving input of one or plural setup order information related to a specific system construction; identifying respective software items of a setup target included in the one or the plural setup order information; referencing a first storage section storing software and storage areas, accessing a storage area of each identified software item of the setup target, and gathering each software item of the setup target; and storing each of the gathered software items in a second storage section as a software group employed during the specific system construction.

### BRIEF DESCRIPTION OF DRAWINGS

Fig. 1 is a diagram for explaining setting up software for system construction;
Fig. 2 is a diagram for explaining an outline of a software collection providing system;
Fig. 3 is a functional block diagram illustrating a schematic configuration of a software collection providing system according to a first exemplary embodiment;
Fig. 4 is a diagram illustrating an example of a setup order information database (DB);
Fig. 5 is a diagram illustrating an example of a software storage area DB;
Fig. 6 is a diagram illustrating an example of a related software information DB;
Fig. 7 is a diagram illustrating an example of a software DB;
Fig. 8 is a diagram illustrating an example of a distribution information DB;
Fig. 9 is a diagram illustrating an example of a management storage region;
Fig. 10 is a block diagram illustrating an outline of a computer that functions as an automatic software gathering device according to the first exemplary embodiment;
Fig. 11 is a block diagram illustrating an outline of a computer that functions as an installation server according to the first exemplary embodiment;
Fig. 12 is a flowchart illustrating an example of software gathering processing;
Fig. 13 is a flowchart illustrating an example of related software gathering processing;
Fig. 14 is a flowchart illustrating an example of related software gathering processing;
Fig. 15 is a flowchart illustrating an example of distribution processing;
Fig. 16 is a flowchart illustrating an example of deployment processing;
Fig. 17 is a flowchart illustrating an example of installation processing;
Fig. 18 is a functional block diagram illustrating a schematic configuration of a software collection providing system according to a second exemplary embodiment; and
Fig. 19 is a block diagram illustrating an outline of a computer that functions as an automatic software gathering device according to the second exemplary embodiment.

### DESCRIPTION OF EMBODIMENTS

Detailed explanation follows regarding exemplary embodiments related to technology disclosed herein, with reference to the drawings.

First, explanation follows regarding an outline of a software collection providing system according to each of the exemplary embodiments described in detail below.

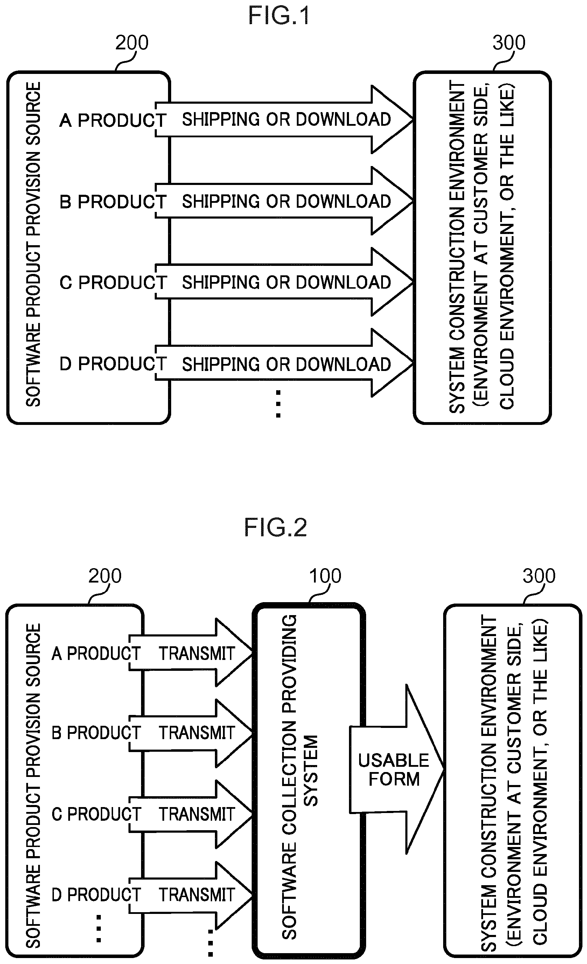

Consider a case in which the software collection providing system according to each of the exemplary embodiments is not used when constructing a system desired by a customer. In such cases, the operator constructing the system first acquires each item of needed software from a provision source 200 of the software products, as illustrated in Fig. 1. Software acquisition methods include, for example, methods in which software is downloaded from a distribution site, and methods in which software is obtained stored on a recording medium such as a CD-ROM shipped from the provision source 200. The operator needs to deploy each acquired software item on a target machine at the customer side, or in a system construction environment 300 such as a cloud environment. The setup entails a high operating cost when a large number of software items are set up.

As illustrated in Fig. 2, a software collection providing system 100 according to each of the exemplary embodiments therefore functions between the provision source 200 of the software products and the system construction environment 300. From the provision source 200 of the software products, the software collection providing system 100 acquires each software item that the customer or operator has asked to have set up, as the software needed for system construction. The software needed for system construction is thereby collected in the software collection providing system 100.

The software collection providing system 100 not only collects software for which setup was asked for, but also collects, for example, related software such as patches for these software items, drivers, and tools, and supplementary software for hardware. The software collection providing system 100 then deploys the collected software group in the system construction environment 300 in an immediately usable state.

Detailed explanation follows regarding each exemplary embodiment.

### First Exemplary Embodiment

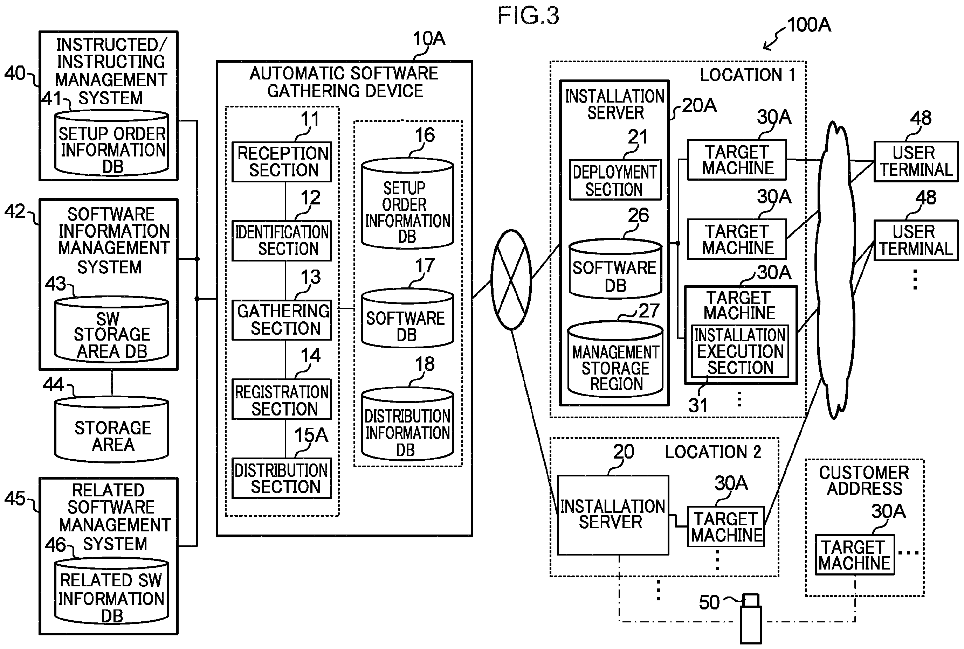

As illustrated in Fig. 3, a software collection providing system 100A according to a first exemplary embodiment includes an automatic software gathering device 10A and plural installation servers 20A situated at respective locations such as data centers. The automatic software gathering device 10A primarily includes functionality for gathering software needed in system construction. The installation servers 20A are connected to plural target machines 30A, and software and various information needed by the system to be constructed on the target machines 30A are deployed to the installation servers 20A. The automatic software gathering device 10A and the installation servers 20A are connected together through a network.

The target machines 30A are operated by a user terminal 48 using the cloud environment. In cases other than those in which the target machine 30A is situated at a location connected to an installation server 20A, the target machine 30A may, for example, be situated at a customer address. Note that the target machines 30A are information processing devices such as server devices or personal computers, and the user terminal 48 is an information processing device such as a personal computer, a tablet, or a smartphone. The number of target machines 30A used by the software collection providing system 100A and the number of user terminals 48 may be any number.

The automatic software gathering device 10A is respectively connected to an instructed/instructing management system 40, a software information management system 42, and a related software management system 45 by a company local area network (LAN) or the like. The instructed/instructing management system 40, the software information management system 42, and the related software management system 45 each include: an information processing device such as a server device provided with input devices and a display device; and a storage device that stores various databases.

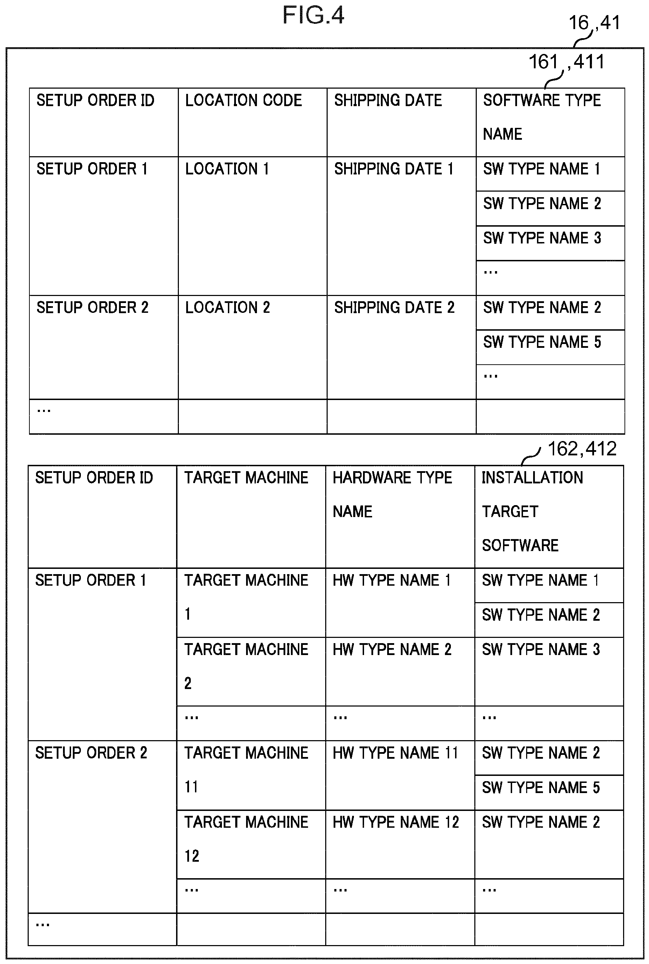

When setup order information has been input by an operator, the instructed/instructing management system 40 receives the inputted setup order information, and registers the received setup order information in a setup order information database (DB) 41. Setup order information includes information identifying which target machines 30A at what location the system is to be constructed on, and is information asking for setup of software needed in the system construction. Fig. 4 is an example of the setup order information DB 41. In the example of Fig. 4, the setup order information DB 41 includes a software order table 411 and a configuration information table 412.

The software order table 411 includes a "setup order ID (identification)" item, a "location code" item, a "shipping date" item, and a "software type name" item. The "setup order ID" is identification information for the setup order information. The "location code" is identification information for the target machines 30A to which the software set up according to the setup order information is to be installed, namely, the locations at which the target machines 30A on which the system is to be constructed are installed. The "shipping date" is a date on which the software to be set up by the setup order information is to be shipped to the customer, namely, a date on which the software can be installed on the target machines 30A for the purpose of system construction. The "software type name" is identification information for the type of software set up by the setup order information.

The configuration information table 412 includes a "setup order ID" item, a "target machine ID" item, a "hardware type name" item, and an "installation target software" item. The "target machine ID" is identification information for target machines 30A to which the software to be set up by the setup order information is to be installed, and is, for example, IP addresses or computer names. The "hardware type name" is identification information for type of hardware of the target machine 30A identified by the target machine ID. The "installation target software" is software type names of the software, out of the software to be set up by the setup order information, to be installed on the target machine 30A identified by the target machine ID.

The software information management system 42 is a system that manages actual data of plural software products (an aggregation of programs) stored in a specific storage area 44. When a new software product is registered in the storage area 44, actual data of the software product and software information for the software product are input by the operator. The software information management system 42 receives the actual data and the inputted software information. In addition to the actual data being stored in the storage area 44, the software information management system 42 associates information indicating the storage area 44 storing the actual data with the received software information, and registers this in a software (SW) storage area DB 43.

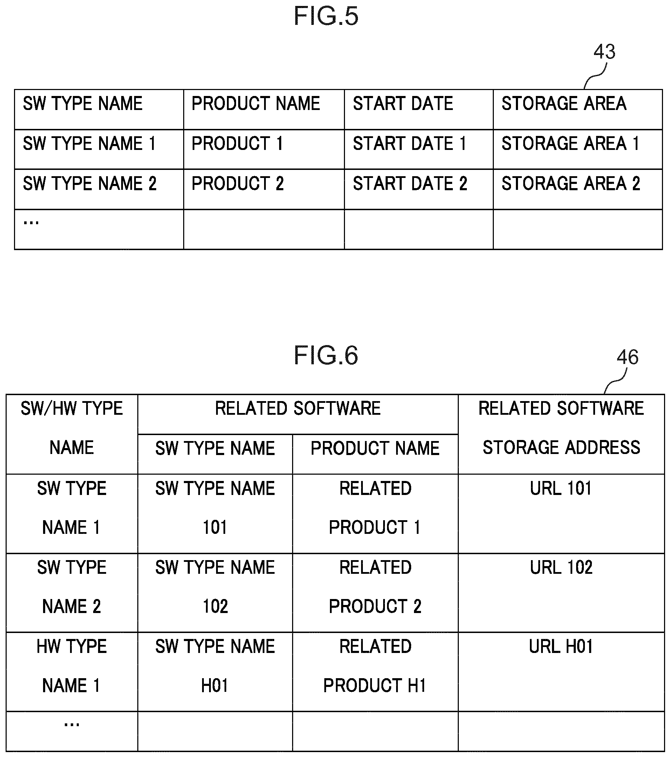

Fig. 5 illustrates an example of a SW storage area DB 43. In the example of Fig. 5, the SW storage area DB 43 includes a "software type name" item, a "product name" item, a "start date" item, and a "storage area" item. The "product name" is a product name of a software product corresponding to the type identified by the "software type name". The "start date" is a date at which the software product is usable. The "storage area" is information such as a path indicating the storage area 44 storing the actual data of the software product.

The related software management system 45 is a system that manages software provided together with main software products, such as patches, drivers, and tools, and related software such as supplementary software for hardware. When the operator has obtained related software information such as a release of a patch or an upgrade for a software product, the operator inputs the related software information into the related software management system 45. The related software management system 45 receives the inputted related software information, and registers the received related software information in a related software (SW) information DB 46. The related software management system 45 cooperates with a hardware design management system (not illustrated in the drawings), references design management information of target machines 30A situated at a location, customer address, or the like, and acquires information regarding software provided to correspond to the hardware type name of the target machines 30A. The related software management system 45 registers the acquired information in the related SW information DB 46. Note that the supplementary software for the hardware is stored in the storage area 44, and may be managed by the software information management system 42.

Fig. 6 illustrates an example of the related SW information DB 46. In the example of Fig. 6, the related SW information DB 46 includes a "SW/HW type name" item, a "SW type name" and a "product name" for a "related software" item, and a "related software storage address". The "SW type name" and the "product name" for the "related software" are a related software type and product name for a software product or hardware of a type identified by the "SW/HW type name". The "related software storage address" is information identifying an access address accessed in order to acquire related software, such as a uniform resource locator (URL) of a distribution site or the path of the storage area 44 serving as an address for obtaining the related software.

The automatic software gathering device 10A includes an reception section 11, an identification section 12, a gathering section 13, a registration section 14, and a distribution section 15A. A setup order information DB 16, a software DB 17, and a distribution information DB 18 are stored in the specific storage region of the automatic software gathering device 10A.

The reception section 11 receives setup order information from the instructed/instructing management system 40. More specifically, the reception section 11 acquires setup order information from the setup order information DB 41 in the instructed/instructing management system 40, and stores the acquired setup order information in the setup order information DB 16 of the device itself. The data structure of the setup order information DB 16 is similar to the data structure of the setup order information DB 41 in the instructed/instructing management system 40 illustrated in Fig. 4, and includes a software order table 161 and a configuration information table 162.

The identification section 12 identifies a specific software product for software asked to be set up by the setup order information. More specifically, the identification section 12 extracts each pair of a software type name and a shipping date from the software order table 161 of the setup order information DB 16. The identification section 12 then identifies, from the SW storage area DB 43 of the software information management system 42, product names of software corresponding to the extracted pairs of software type names and shipping dates. More specifically, the identification section 12 extracts software information having a "software type name" in the SW storage area DB 43 that matches the extracted software type names. Since there are sometimes plural software products corresponding to a single software type name, the identification section 12 identifies "product name" items out of the extracted software information that have an earlier "start date" than the extracted shipping date and that are included in the latest software information.

The identification section 12 references the related SW information DB 46 of the related software management system 45 and identifies type names and product names of related software corresponding to software type names extracted from the software order table 161. Moreover, the identification section 12 extracts hardware type names from the configuration information table 162 of the setup order information DB 16, references the related SW information DB 46, and identifies type names and product names of related software corresponding to the extracted hardware type names.

The gathering section 13 gathers the actual data of software products that have been identified by the identification section 12 (including software products of related software) but are not yet registered in the software DB 17. More specifically, the gathering section 13 acquires information indicating the storage area 44 of the software product identified by the identification section 12 from the SW storage area DB 43. The gathering section 13 then gathers the actual data of the corresponding software products based on the acquired information indicating a storage area 44. The gathering section 13 acquires, from the related SW information DB 46, a related software storage address indicating an address for obtaining the related software identified by the identification section 12. The gathering section 13 then accesses the acquired related software storage address and gathers the actual data of the related software by downloading or the like. Note that the method of gathering the software product and the related software is not limited to the above example. For example, another method may be employed, such as gathering by reading actual data stored on a recording medium such as a CD-ROM.

The registration section 14 registers the actual data of the software product gathered by the gathering section 13 in the software DB 17. When doing so, in cases in which the gathered software product is different from the already registered software products and product names but has the same actual data, the registration section 14 registers sharing information indicating that sharing with an already registered software product is possible. In such cases, the registration section 14 does not register the actual data of the gathered software product.

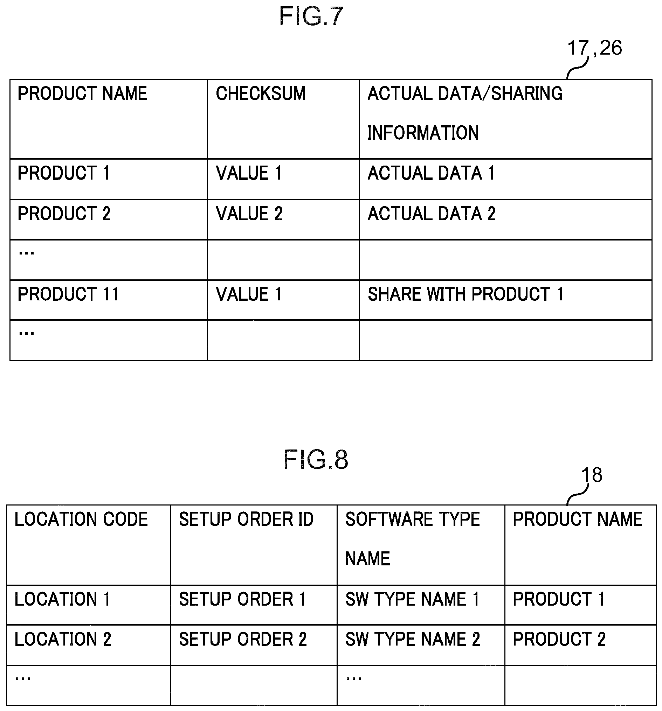

Fig. 7 illustrates an example of the software DB 17. In the example of Fig. 7, the software DB 17 includes a "product name" item, a "checksum" item, and an "actual data/sharing information" item. The "actual data/sharing information" is actual data or sharing information of the software product identified by the "product name". In the example of Fig. 7, actual data are respectively registered for software products having the product names "Product 1" and "Product 2". Sharing information (represented by "shared with Product 1" in the example of Fig. 7) indicating that it is possible to share with the software product having the product name "Product 1" is registered for the software product having the product name "Product 11". The sharing information indicates that the software product having the product name "Product 11" has the same actual data as the software product having the product name "Product 1". The "checksum" is a checksum value calculated from the actual data of each software product. The checksum value is used as for filtering when determining whether or not a software product having the same actual data as the gathered software product is already registered in the software DB 17.

The distribution section 15A registers, in the distribution information DB 18, distribution information indicating the information of the software product to be distributed to each location in accordance with the setup order information.

Fig. 8 illustrates an example of the distribution information DB 18. In the example of Fig. 8, the distribution information DB 18 includes a "location code" item, a "setup order ID" item, a "software type name" item, and a "product name" item. A location that is a distribution address of the software is identified by the "location code". The "setup order ID" indicates which setup order information the software is to be distributed in accordance with. The "software type name" is the type name of the software for which set up is asked for, "product name" is the product name of the software product identified by the identification section 12 corresponding to the type identified by the "software type name".

The distribution section 15A distributes distribution information for the location and actual data of the software product identified by that distribution information to the installation servers 20A, in accordance with a distribution request from installation servers 20A situated at each location. When doing so, the distribution section 15A does not perform distribution for software products already registered in a software DB 26 (described in detail below) of the installation server 20A. The distribution section 15A distributes sharing information for software products that are different from the software products and product names already registered in the software DB 26 but have the same actual data. The distribution section 15A extracts, from the configuration information table 162 of the setup order information DB 16, configuration information corresponding to the setup order ID included in the distribution information, and distributes the extracted configuration information to the installation server 20A together with the distribution information and the actual data or sharing information of the software product. Together with this, the distribution section 15A also distributes an installation program (described in detail below) used when installing the distributed software products on the target machine 30A. Note that the installation program may be pre-stored in each of the installation servers 20A.

The installation servers 20A each include a deployment section 21. The software DB 26 is stored in a specific storage region of the installation server 20A, and a management storage region 27 is provided to the specific storage region.

The deployment section 21 transmits, to the automatic software gathering device 10A, a distribution request that includes the location code of the location where the device itself is situated. The deployment section 21 then receives, from the automatic software gathering device 10A, distribution information corresponding to the transmitted location code, the configuration information, the installation program, and the actual data or sharing information of the software product. The deployment section 21 registers the received actual data or sharing information of the software product in the software DB 26. The data structure of the software DB 26 is similar to the data structure of the software DB 17 in the automatic software gathering device 10A illustrated in Fig. 7.

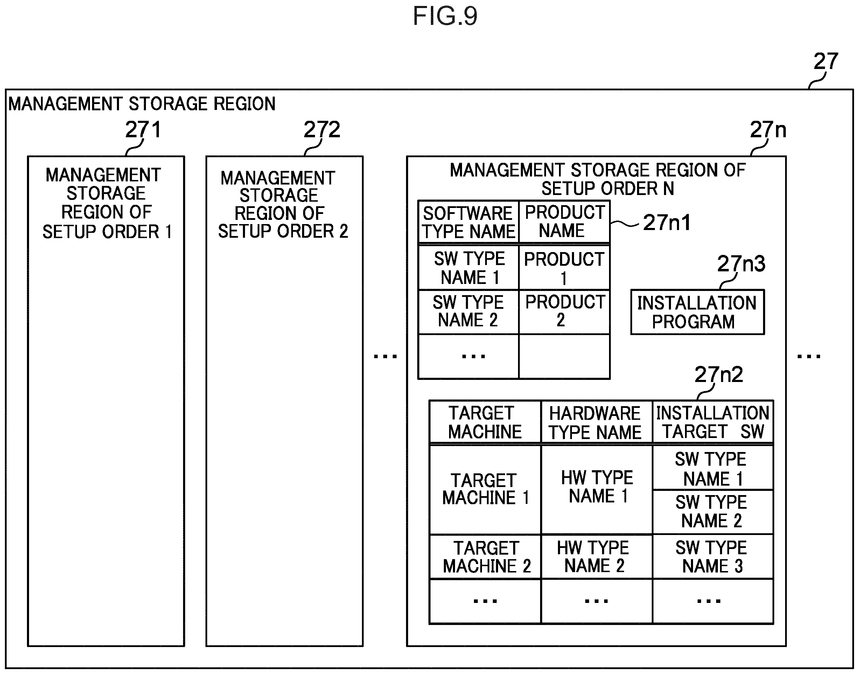

The deployment section 21 allocates management storage regions 27n (n = 1, 2, ...) in the management storage region 27 for each setup order ID included in the distribution information distributed from the automatic software gathering device 10A. As illustrated in Fig. 9, the deployment section 21 extracts each pair of a software type name and a product name included in the distribution information associated with the corresponding setup order ID, and stores the extracted pairs as software lists 27n1 in the management storage regions 27n of the respective setup order IDs. A hard link to the software DB 26 is set for each product name in the software list 27n1. The deployment section 21 stores configuration information 27n2 and an installation program 27n3 corresponding to the corresponding setup order ID. Note that the installation program 27n3 may be stored in a common storage region inside the management storage region 27 rather than in a management storage region 27n for each setup order ID, since the installation program 27n3 is common for each setup order ID.

When a target machine 30A has been operated from the user terminal 48 using the cloud environment and a setup order ID corresponding to that target machine 30A has been input, the deployment section 21 permits access to the management storage region 27n of that setup order ID from the target machine 30A. Note that the deployment section 21 also permits access to the software DB 26 from the software list 27n1 in the management storage region 27n of the setup order ID given access permission.

When constructing a system on a target machine 30A situated at, for example, a customer address rather than a target machine 30A connected to an installation server 20A, the deployment section 21 can use the information stored in the management storage regions 27n for each setup order ID while offline. More specifically, the deployment section 21 outputs, to a portable disk 50, a combination of the information stored in the management storage region 27n of each setup order ID, and the actual data of the software products in the software DB 26 hard linked in the software list 27n1. Connecting the portable disk 50 to the target machine 30A at a customer address or the like enables the software products corresponding to the setup order information to be used in the target machine 30A.

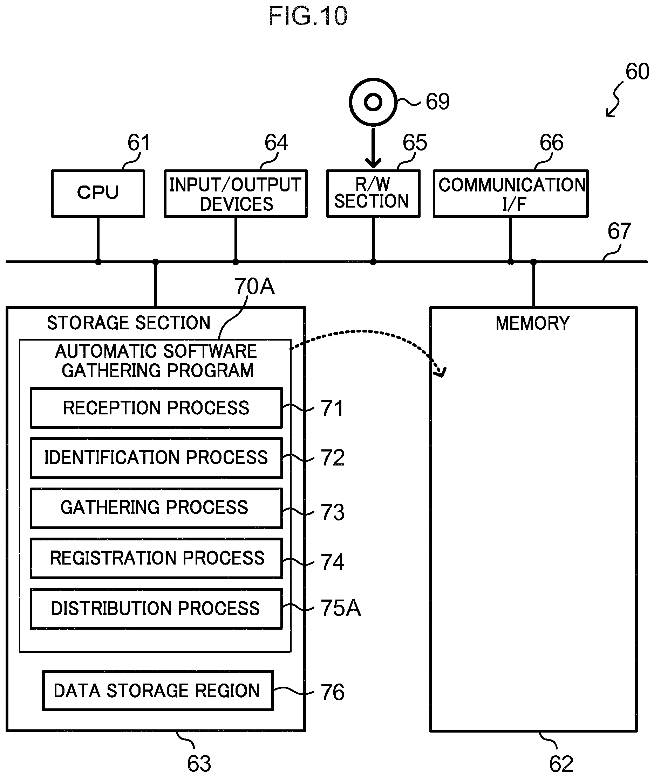

The automatic software gathering device 10A may, for example, be implemented by the computer 60 illustrated in Fig. 10. The computer 60 includes a CPU 61, memory 62 serving as a temporary storage region, and a non-volatile storage section 63. The computer 60 further includes input/output devices 64 such as a display device and an input device, a read/write (R/W) section 65 that controls reading and writing of data from and to a recording medium 69, and a communication interface (I/F) 66. The CPU 61, the memory 62, the storage section 63, the input/output devices 64, the R/W section 65, and the communication I/F 66 are connected to one another through a bus 67.

The storage section 63 may be implemented by a hard disk drive (HDD), a solid state drive (SSD), flash memory, or the like. An automatic software gathering program 70A for causing the computer 60 to function as an automatic software gathering device 10 is stored in the storage section 63, which serves as a storage medium. The automatic software gathering program 70A includes a reception process 71, an identification process 72, a gathering process 73, a registration process 74, and a distribution process 75A. The storage section 63 includes a data storage region 76 that stores the data respectively forming the setup order information DB 16, the software DB 17, and the distribution information DB 18.

The CPU 61 reads the automatic software gathering program 70A from the storage section 63, expands the automatic software gathering program 70A into the memory 62, and sequentially executes each process included in the automatic software gathering program 70A. The CPU 61 operates as the reception section 11 illustrated in Fig. 3 by executing the reception process 71. The CPU 61 also operates as the identification section 12 illustrated in Fig. 3 by executing the identification process 72. The CPU 61 also operates as the gathering section 13 illustrated in Fig. 3 by executing the gathering process 73. The CPU 61 also operates as the registration section 14 illustrated in Fig. 3 by executing the registration process 74. The CPU 61 also operates as the distribution section 15A illustrated in Fig. 3 by executing the distribution process 75A. The CPU 61 also reads the data stored in the data storage region 76, and respectively expands the data into the memory 62 as the setup order information DB 16, the software DB 17, and the distribution information DB 18. The computer 60, which executes the automatic software gathering program 70A, thereby functions as the automatic software gathering device 10A.

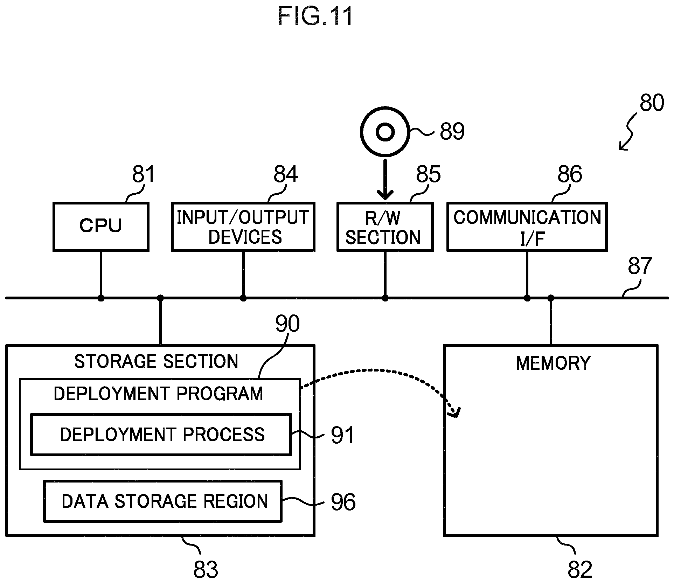

The installation servers 20A may, for example, be implemented by the computer 80 illustrated in Fig. 11. The computer 80 includes a CPU 81, memory 82 serving as a temporary storage region, and a non-volatile storage section 83. The computer 80 further includes input/output devices 84, an R/W section 85 that controls reading and writing of data from and to a recording medium 89, and a communication I/F 86. The CPU 81, the memory 82, the storage section 83, the input/output devices 84, the R/W section 85, and the communication I/F 86 are connected to one another through a bus 87.

The storage section 83 may be implemented by a HDD, an SSD, flash memory, or the like. A deployment program 90 for causing the computer 80 to function as the installation server 20A is stored in the storage section 83, which serves as a storage medium. The deployment program 90 includes a deployment process 91. The storage section 83 includes a data storage region 96 that stores data respectively forming the software DB 26 and the management storage region 27.

The CPU 81 reads the deployment program 90 from the storage section 83, expands the deployment program 90 into the memory 82, and sequentially executes each process included in the deployment program 90. The CPU 81 operates as the deployment section 21 illustrated in Fig. 3 by executing the deployment process 91. Moreover, the CPU 81 reads the data stored in the data storage region 96, and respectively expands the data into the memory 82 as the software DB 26 and the management storage region 27. The computer 80, which executes the deployment program 90, thereby functions as the installation server 20A.

Note that the functionality respectively implemented by the automatic software gathering program 70A and the deployment program 90 may, for example, be implemented by a semiconductor circuit, and more specifically, by an application specific integrated circuit (ASIC).

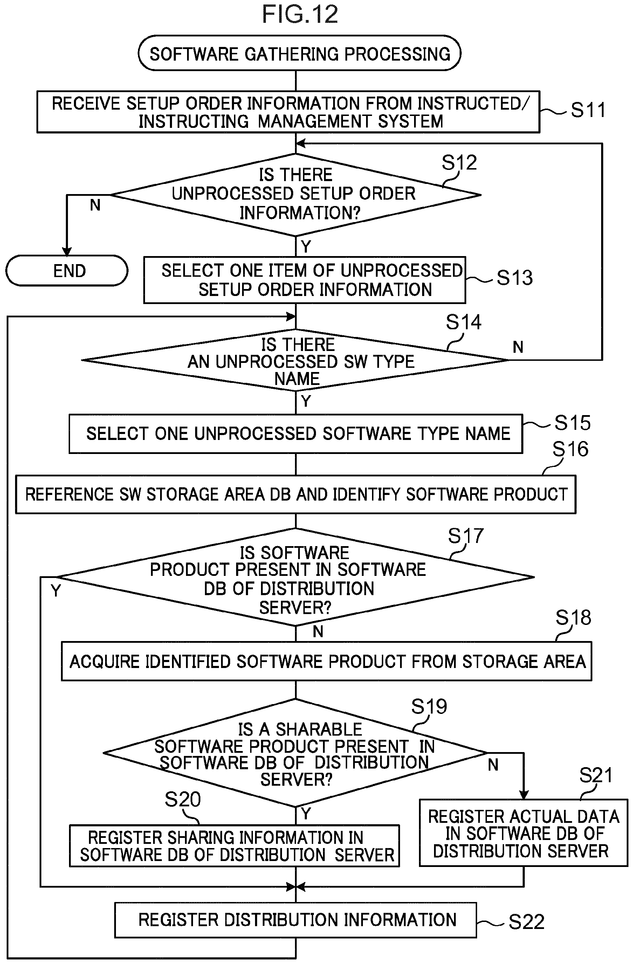

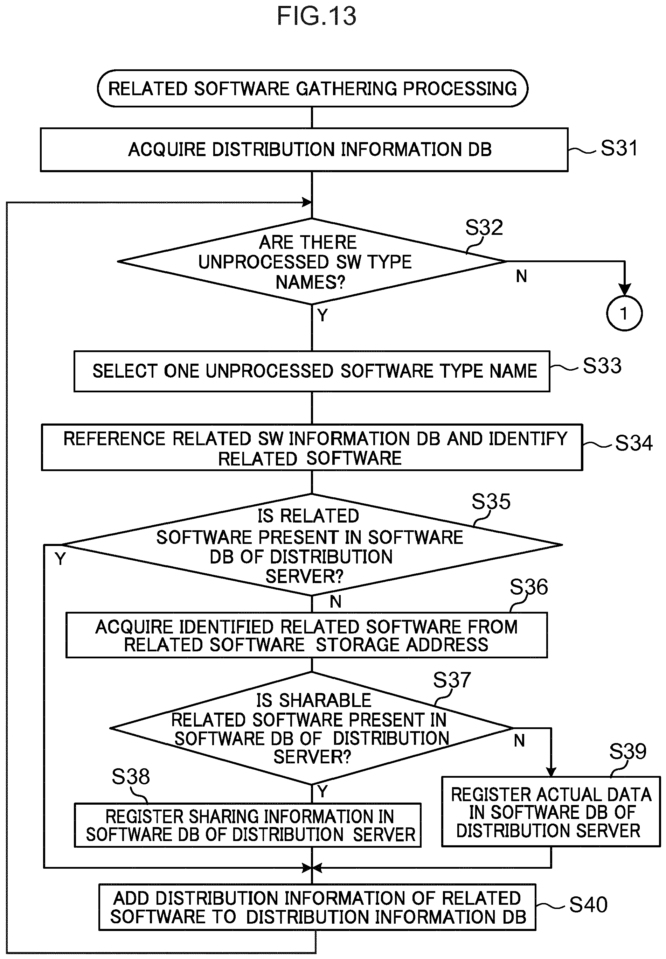

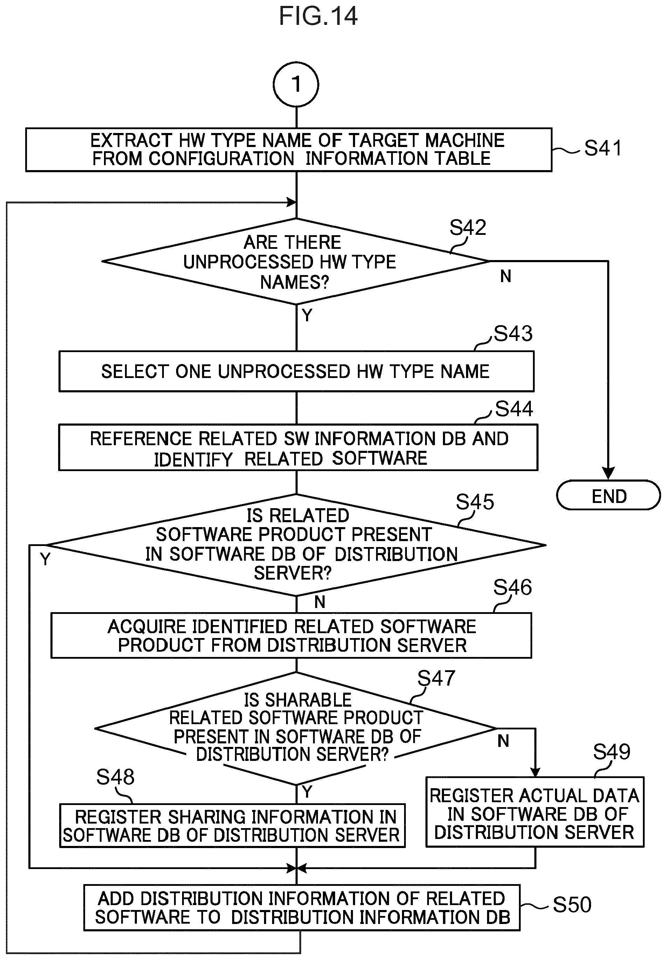

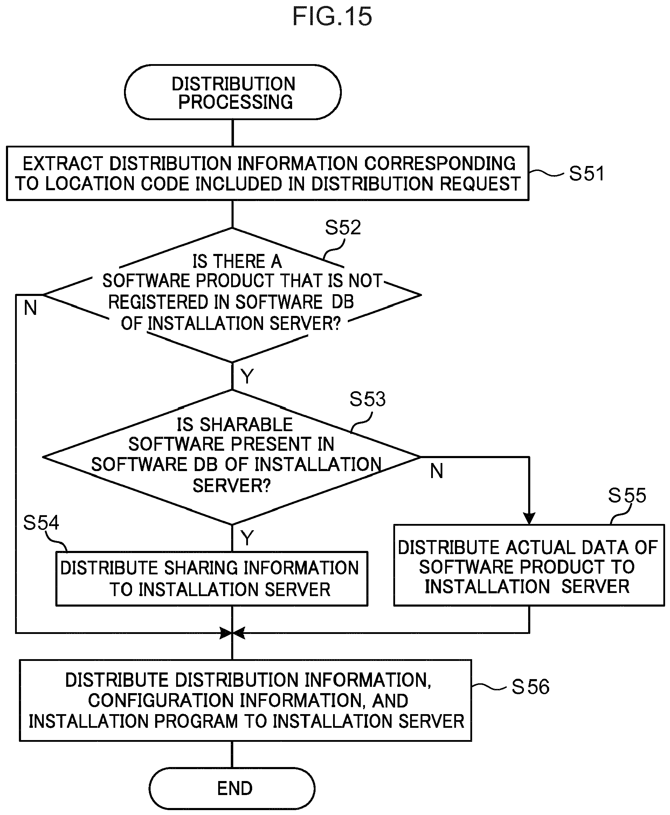

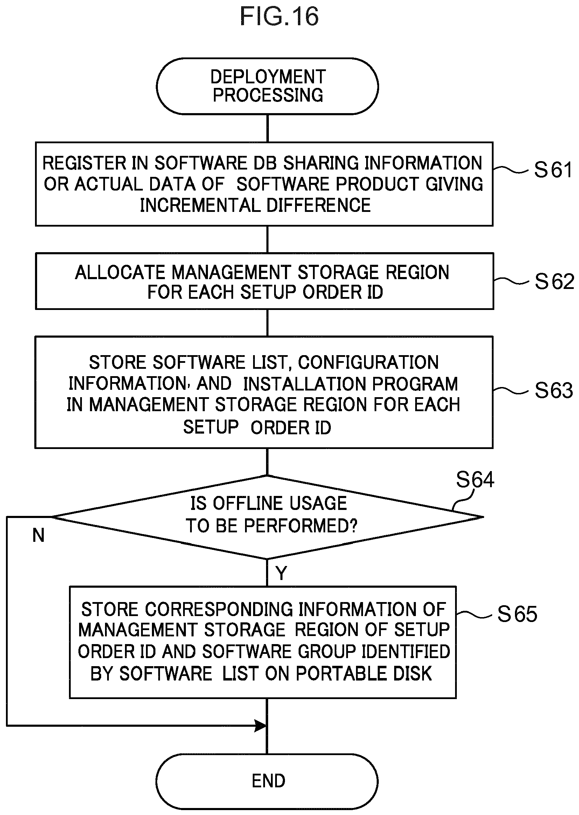

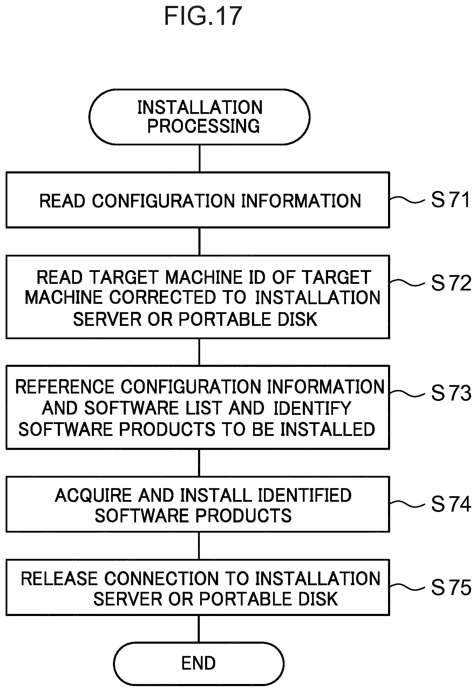

Next, explanation follows regarding operation of the software collection providing system 100A according to the first exemplary embodiment. The operator registers setup order information in the instructed/instructing management system 40 for setup of software needed in system construction. In the automatic software gathering device 10A, the software gathering processing illustrated in Fig. 12 and the related software gathering processing illustrated in Fig. 13 and Fig. 14 are executed by batch processing at periodic timings. When the automatic software gathering device 10A has received a distribution request transmitted from an installation server 20A, the distribution processing illustrated in Fig. 15 is executed in the automatic software gathering device 10A. When distribution information or the like distributed from the automatic software gathering device 10A has been received, the deployment processing illustrated in Fig. 16 is executed on the installation server 20A. When a software group has been deployed to the installation server 20A, the installation processing illustrated in Fig. 17 is executed in each of the target machines 30A by an operation instruction from a user. Detailed description regarding each processing is given below.

At step S11 of the software gathering processing illustrated in Fig. 12, the reception section 11 acquires setup order information from the setup order information DB 41 in the instructed/instructing management system 40, and stores the acquired setup order information in the setup order information DB 16 of the device itself.

Next, at step S12, the identification section 12 determines whether or not setup order information that has not yet been processed in the processing of steps S14 to S22 below is present in the software order table 161 of the setup order information DB 16. In cases in which there is unprocessed setup order information, processing transitions to step S 13 and the identification section 12 selects one item of the unprocessed setup order information.

Next, at step S14, the identification section 12 determines whether or not there are software type names that have not yet been processed in the processing of steps S 15 to S22 below out of the software type names included in the selected setup order information. Processing transitions to step S15 in cases in which there are unprocessed software type names, or processing returns to step S12 in cases in which there are no unprocessed software type names.

At step S15, the identification section 12 selects one software type name from out of the unprocessed software type names included in the setup order information selected at step S13 above.

Next, at step S16, the identification section 12 extracts the selected software type name and the shipping date included in the setup order information selected at step S13 above. The identification section 12 then identifies "product names" that have a "software type name" in the SW storage area DB 43 matching the selected software type name, that have an earlier "start date" than the extracted shipping date, and that are included in the latest software information (at a date immediately prior to when usage becomes possible).

Note that in cases in which there is no software information having an earlier "start date" than the extracted shipping date, an alert may be output, and processing may return to step S 14.

Next, at step S 17, the gathering section 13 determines whether or not the software product identified by the identification section 12 is registered in the software DB 17. More specifically, the gathering section 13 checks whether or not the product name identified at step S16 is present in the "product name" column of the software DB 17. Processing transitions to step S22 in cases in which a corresponding software product is already registered in the software DB 17, or processing transitions to step S18 in cases in which a corresponding software product is not already registered in the software DB 17.

At step S18, the gathering section 13 acquires, from the SW storage area DB 43, information indicating the storage area 44 of the software product identified by the identification section 12. The gathering section 13 then acquires the actual data of the corresponding software product based on the information indicated by the acquired storage area 44.

Next, at step S 19, the registration section 14 determines whether or not a software product that can be shared with the acquired software product is registered in the software DB 17. More specifically, the registration section 14 calculates a checksum value from the actual data of the acquired software product. The registration section 14 then acquires actual data of software products having a value in the "checksum" column of the software DB 17 matching the calculated checksum value. The registration section 14 then checks whether or not the actual data of the software product acquired from the storage area 44 is the same as the actual data of the software product acquired from the software DB 17. If the actual data is the same, the registration section 14 determines that a software product that can be shared with the software product acquired from the storage area 44 is already registered in the software DB 17. Processing transitions to step S20 in cases in which a software product that can be shared with the software product acquired from the storage area 44 is already registered, or processing transitions to step S21 in cases in which no software that can be shared has been registered.

At step S20, the registration section 14 registers in the software DB 17 the product name of the software product acquired from the storage area 44, the checksum value calculated at step S 19 above, and the sharing information. The sharing information is information indicating that the actual data was determined to be the same at step S 19, and can be shared with a software product already registered in the software DB 17.

However, at step S21, the registration section 14 registers in the software DB 17 the product name of the software product acquired from the storage area 44, the checksum value calculated at step S 19 above, and the actual data.

Next, at step S22, the distribution section 15A registers the distribution information in the distribution information DB 18. The distribution information includes the location code and setup order ID of the setup order information selected at step S 13, the software type name selected at step S15, and the product name identified at step S16.

Processing then returns to step S14. When processing has completed for all of the setup order information stored in the setup order information DB 16, negative determination is made at step S12, and the software gathering processing ends.

Next, at step S31 of the related software gathering processing illustrated in Fig. 13, the identification section 12 acquires the distribution information DB 18.

Next, at step S32, the identification section 12 determines whether or not a software type name not yet processed in the processing of steps S33 to S40 below is present amongst the software type names stored in the "software type name" column of the distribution information DB 18. In cases in which there are unprocessed software type names, processing transitions to step S33, and the identification section 12 selects one unprocessed software type name.

Next, at step S34, the identification section 12 references the related SW information DB 46 of the related software management system 45, and identifies type names and product names of related software corresponding to the selected software type name.

Next, at step S35, the gathering section 13 determines whether or not the related software identified by the identification section 12 is registered in the software DB 17. The determination method is similar to that of step S 17 of the software gathering processing (Fig. 12). Processing transitions to step S40 in cases in which the corresponding related software is already registered in the software DB 17, or processing transitions to step S36 in cases in which the related software is not registered in the software DB 17.

At step S36, the gathering section 13 acquires, from the related SW information DB 46, a related software storage address indicating an address for obtaining the related software identified by the identification section 12. The gathering section 13 then accesses the acquired related software storage address, and acquires the actual data of the related software by downloading or the like.

Next, at step S37, the registration section 14 determines whether or not a software product that can be shared with the acquired related software is registered in the software DB 17. The determination method is similar to that of step S 19 of the software gathering processing (Fig. 12). Processing transitions to step S38 in cases in which a software product that can be shared with the related software acquired from the address-for-obtaining is already registered, or processing transitions to step S39 in cases in which software that can be shared is not already registered.

At step S38, the registration section 14 registers in the software DB 17 the product name of the related software acquired from the address-for-obtaining, the checksum value calculated at step S37 above, and the sharing information. The sharing information is information indicating that the actual data was determined to be the same at step S37, and can be shared with related software already registered in the software DB 17.

However, at step S39, the registration section 14 registers in the software DB 17 the product name of the related software product acquired from the address-for-obtaining, the checksum value calculated at step S37 above, and the actual data.

Next, at step S40, the distribution section 15A adds distribution information for the related software identified at step S34 above to the distribution information DB 18. More specifically, the distribution section 15A adds distribution information associated with the software type name and product name of the related software identified at step S34 above to the location code and setup order ID of the distribution information that includes the software type name selected at step S33 above. Moreover, for all of the distribution information that includes the same software type name as the software type name selected at step S33 above, the distribution section 15A similarly adds distribution information for the related software. Moreover, the distribution section 15A sets flags such that the subsequent step S32 treats software type names that are the same as the software type names selected at step S33 above as having been processed.

Next, processing returns to step S32, and processing transitions to step S41 of Fig. 14 in cases in which it is determined that there are no unprocessed software type names present in the distribution information DB 18. At step S41, the identification section 12 extracts all of the hardware type names of the target machines 30A included in the configuration information table 162 of the setup order information DB 16.

Next, at step S42, the identification section 12 determines whether or not a hardware type name not yet processed by the processing of steps S43 to S50 below is present amongst the extracted hardware type names. In cases in which there are unprocessed hardware type names, processing transitions to step S43, and the identification section 12 selects one unprocessed hardware type name.

Next, at step S44, the identification section 12 references the related SW information DB 46 of the related software management system 45, and identifies type names and product names of related software corresponding to the selected hardware type name. Related software identified here is supplementary software for the hardware acquired by cooperating with the design management system.

Similarly to in steps S35 to S39, in steps S45 to S49 below, the gathering section 13 acquires supplementary software that is related software, and the registration section 14 registers the actual data or sharing information in the software DB 17.

Next, at step S50, the distribution section 15A adds distribution information to the distribution information DB 18 for the related software (supplementary software) identified at step S45 above. More specifically, the distribution section 15A identifies, from the setup order information DB 16, the setup order ID and the location code corresponding to the hardware type name selected at step S43 above. The distribution section 15A then adds the distribution information associated with the software type name and product name of the related software identified at step S44 above to the identified location code and setup order ID. Moreover, for all of the distribution information corresponding to the setup order information that includes the same hardware type name as the hardware type name selected at step S43 above, the distribution section 15A similarly adds the distribution information for the related software. Moreover, the distribution section 15A sets flags such that the subsequent step S42 treats hardware type names that are the same as the hardware type names selected at step S43 above as having been processed.

Next, processing returns to step S42, and the related software gathering processing ends when it is determined that there are no unprocessed hardware type names present in the configuration information table 162.

Next, the automatic software gathering device 10A receives the distribution request that includes the location code of the location where the installation server 20A is installed from the installation server 20A. Then, at step S51 of the distribution processing illustrated in Fig. 15, the distribution section 15A extracts, from the distribution information DB 18, distribution information that includes the same location code as the location code included in the distribution request.

Next, at step S52, the distribution section 15A determines whether or not software products that are not registered in the software DB 26 of the installation server 20A are present amongst the software products indicated by the "product name" included in the extracted distribution information. Processing transitions to step S53 in cases in which there are unregistered software products present, or processing transitions to step S56 in cases in which all of the software products are registered.

At step S53, for each software product not registered in the software DB 26, the distribution section 15A determines whether or not sharing with any software product already registered in the software DB 26 is possible. Processing transitions to step S54 for software products that can share with a software product present in the software DB 26, and processing transitions to step S55 for software products for that can share with no software products.

At step S54, the distribution section 15A distributes, to the installation server 20A, the product name of the corresponding software product, the checksum value, and sharing information indicating that sharing with a software product already registered in the software DB 26 is possible. However, at step S55, the distribution section 15A distributes, to the installation server 20A, the product name of the corresponding software product, the checksum value, and the actual data. At step S52 above, for each software product determined to not be registered in the software DB 26, the processing of either step S54 or step S55 above is executed. For each software product already registered in the software DB 26, the processing of steps S53 to S55 is omitted. Thus, only software products giving incremental differences that are not yet registered in the software DB 26 of the installation server 20A are distributed from out of the software products included in the distribution information.

Next, at step S56, the distribution section 15A extracts, from the configuration information table 162 of the setup order information DB 16, the configuration information corresponding to the setup order ID included in the distribution information extracted at step S51 above. The distribution section 15A then distributes the distribution information extracted at step S51 above, the extracted configuration information, and the installation program to the installation server 20A, and the distribution processing ends.

Note that although explanation has been given above regarding a case in which the distribution processing illustrated in Fig. 15 is executed when the automatic software gathering device 10A receives the distribution request from the installation server 20A, there is no limitation thereto. Configuration may be made such that the automatic software gathering device 10A holds received distribution requests, executes distribution processing at periodic timings using batch processing, and held distribution requests are processed together.

Next, the distribution information distributed from the automatic software gathering device 10A, the configuration information, the installation program, and the actual data or sharing information of the software product are received by the installation server 20A. Then, at step S61 of the deployment processing illustrated in Fig. 16, the deployment section 21 registers the actual data or the sharing information of the received software product in the software DB 26.

Next, at step S62, the deployment section 21 allocates management storage regions 27n (n = 1, 2, ...) in the management storage region 27 for each setup order ID included in the received distribution information.

Next, at step S63, for each setup order ID, the deployment section 21 stores, in the corresponding management storage regions 27n, information that has been set up in accordance with the setup order information indicating the setup order ID. More specifically, the deployment section 21 extracts each pair of a software type name and a product name included in the distribution information associated with the corresponding setup order ID, and stores the extracted pairs in the management storage region 27n of the setup order ID as the software list 27n1. A hard link to the software DB 26 is set for each product name in the software list 27n1. Moreover, the deployment section 21 stores the configuration information 27n2 and the installation program 27n3 corresponding to the corresponding setup order ID.

Next, at step S64, determination as to whether or not to perform offline usage is performed for the information stored in the management storage region 27n of each of the setup order IDs. Processing transitions to step S65 when usage is to be offline. At step S65, the deployment section 21 stores, on the portable disk 50, a combination of information stored in the management storage region 27n of each setup order ID, and the actual data of the software product in the software DB 26 hard linked by the software list 27n1. The processing of step S65 is skipped in cases in which there is no offline usage. The deployment processing then ends.

Although explanation has been given above regarding a case in which the deployment processing illustrated in Fig. 16 is executed when the installation server 20A receives the distribution information or the like from the automatic software gathering device 10A, there is no limitation thereto. Configuration may be made such that the installation server 20A holds received distribution information and the like, executes deployment processing by batch processing at periodic timings, and the held distribution information and the like is processed together.

Thus, in order for the customer to use the collected information for each item of setup order information in the installation server 20A situated at each location, the customer operates the target machine 30A from the user terminal 48 using the cloud environment, and accesses the installation server 20A. When doing so, the customer inputs the setup order ID corresponding to the target machine 30A to be operated. The deployment section 21 permits access from the target machine 30A to the management storage regions 27n of the inputted setup order ID, and to software product groups in the software DB 26 identified by software list 27n1. Access permission or denial may employ file sharing technology such as a common internet file system (CIFS) or a network file system (NFS).

At step S65 above, the set up software product group can also be used in the target machine 30A when the portable disk 50 storing the information of the management storage regions 27n is connected to the target machine 30A corresponding to the setup order ID.

In order to construct the system on the target machines 30A, the installation processing illustrated in Fig. 17 is executed in each target machine 30A. The installation processing is executed due to the install program stored in the management storage region 27n of the setup order ID being started up by an installation execution section 31 of the target machine 30A.

At step S71, the installation execution section 31 reads the configuration information 27n2 stored in the management storage region 27n accessible from the target machine 30A.

Next, at step S72, installation execution section 31 reads the target machine IDs (IP addresses, computer names, or the like) of the target machines 30A connected to the installation server 20A or the target machine 30A connected to the portable disk 50.

Next, at step S73, the installation execution section 31 references the configuration information 27n2 and the software list 27n1 read at step S71 above, and identifies software products to be installed on the target machines 30A. More specifically, the installation execution section 31 acquires an installation target software type name in the configuration information 27n2 corresponding to the target machine IDs read at step S72 above. The installation execution section 31 then identifies product names in the software list 27n1 corresponding to the acquired software type names.

Next, at step S74, the installation execution section 31 acquires the software product group identified at step S73 above. The installation execution section 31 may acquire the software product group from the software DB 26 of the installation server 20A by a hard link in the software list 27n1 in cases in which the target machine 30A is connected to an installation server 20A. The installation execution section 31 may acquire the software product group stored in the portable disk 50 in cases in which the portable disk 50 is connected to the target machine 30A. The installation execution section 31 then sequentially installs the acquired software product group to the target machine 30A in accordance with a predetermined installation procedure by a silent installer or the like. In the installation procedure, an appropriate rule, such as the sequence in which the main software product, settings files, and patches are installed, may be predetermined.

The installation execution section 31 can receive a designation for software not to be an installation target from amongst the software products to be automatically installed by the target machine 30A. In cases in which such a designation has been received, the installation execution section 31 excludes the corresponding software products from the installation targets.

When all installations have completed, at the next step S75, the installation execution section 31 releases the connection between the target machine 30A and the installation server 20A or the portable disk 50, and the installation processing ends.

Note that in cases of respectively connected plural target machines 30A corresponding to a single item of setup order information, the installation execution section 31 of a representative target machine 30A may also execute installation on other target machines 30A. Unified installation on plural target machines 30A is enabled since it can be ascertained which software products are to be installed on which target machine 30A using the configuration information.

As explained above, in the software collection providing system 100A according to the first exemplary embodiment, the automatic software gathering device 10A gathers software products requested for set up by the setup order information, and software products related thereto. A software product group needed in the system construction is accordingly collected in the automatic software gathering device 10A. Accordingly, gathering of software employed in system construction can be made more efficient.

Moreover, in the software collection providing system 100A according to the first exemplary embodiment, information distributed to the installation server 20A of each location is stored in combination in the management storage region 27n provided for each item of setup order information. Thus, management of information for each item of setup order information is facilitated when the installation server 20A is accessed from the target machine 30A or information is stored in the portable disk 50. Moreover, since labor such as storing each software product on a recording medium for shipping is unnecessary, this causes a reduction in management man-hours, and a reduction in recording media themselves.

In the software collection providing system 100A according to the first exemplary embodiment, checking is performed when the actual data of the software products gathered by the automatic software gathering device 10A are registered in the software DB 17, so as to avoid redundant registration. This enables storage region volumes to be suppressed for the software DB 17.

Moreover, even when the software products are distributed to the installation server 20A from the automatic software gathering device 10A, actual data of software products already registered in the software DB 26 of the installation server 20A are not distributed. This enables the data transmission volume between the automatic software gathering device 10A and the installation server 20A on the network to be reduced, and also enables the storage region volume for the software DB 26 to be suppressed.

Although explanation has been given above regarding a case of storing information related to each item of setup order information in the management storage region 27n of each setup order ID in the installation server 20A in the first exemplary embodiment, there is no limitation thereto. Distribution information and configuration information distributed from the automatic software gathering device 10A may be stored as-is without providing the management storage region 27n of each setup order ID. In such cases, it is sufficient for only distribution information and configuration information corresponding to the setup order ID inputted during access from the target machine 30A to be accessible.

### Second Exemplary Embodiment

Next, explanation follows regarding a second exemplary embodiment. In the first exemplary embodiment, explanation has been given regarding the software collection providing system 100A, which includes the automatic software gathering device 10A and the installation servers 20A. In a software collection providing system 100B according to a second exemplary embodiment, an automatic software gathering device 10B functions as both the automatic software gathering device 10A and the installation servers 20A of the first exemplary embodiment. Note that in the software collection providing system 100B according to the second exemplary embodiment, the same reference numerals are allocated to sections similar to those of the software collection providing system 100A according to the first exemplary embodiment, and detailed explanation thereof is omitted.

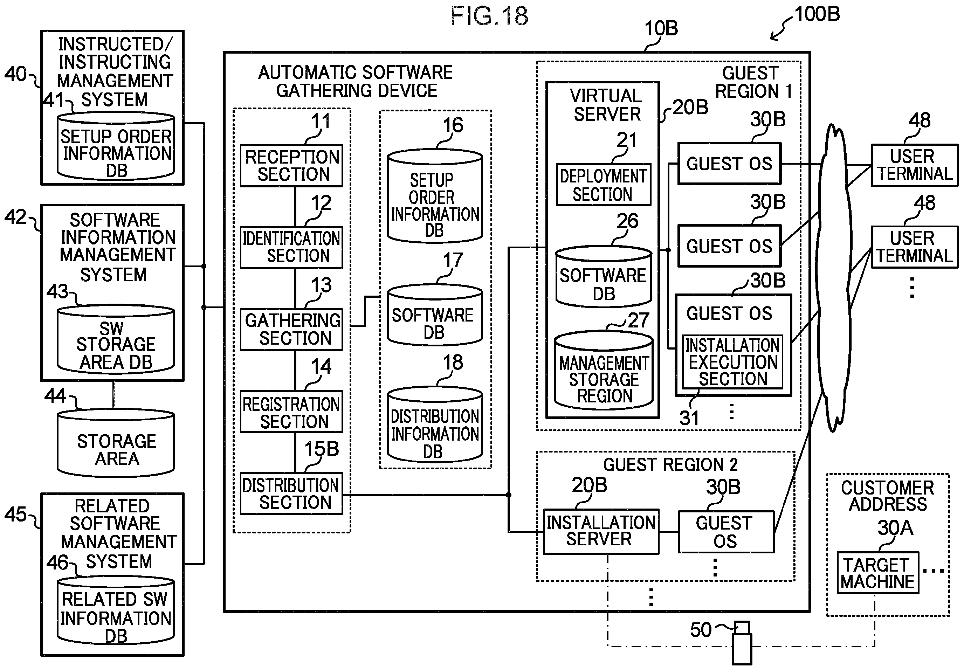

As illustrated in Fig. 18, the software collection providing system 100B according to the second exemplary embodiment includes the automatic software gathering device 10B.

Similarly to the automatic software gathering device 10A according to the first exemplary embodiment, the automatic software gathering device 10B is respectively connected to the instructed/instructing management system 40, the software information management system 42, and the related software management system 45. Moreover, the automatic software gathering device 10B includes the reception section 11, the identification section 12, the gathering section 13, the registration section 14, and a distribution section 15B. Moreover, the setup order information DB 16, the software DB 17, and the distribution information DB 18 are stored in a specific storage region of the automatic software gathering device 10B.

The distribution section 15B differs from the distribution section 15A according to the first exemplary embodiment in that distribution information and software product groups are distributed to respective virtual servers 20B, described below, rather than just to the installation servers 20A.

In the automatic software gathering device 10B, a portion of memory space of the automatic software gathering device 10B is allocated as a guest region for each of the plural virtual servers 20B. Each virtual server 20B functions similarly to each of the installation servers 20A of the first exemplary embodiment, and the guest regions correspond to the respective locations of the first exemplary embodiment. Plural virtual machines are respectively constructed on each of the virtual servers 20B, and a respective guest operating system (OS) 30B runs on each virtual machine. Each virtual machine running a respective guest OS 30B corresponds to a target machine 30A of the first exemplary embodiment.

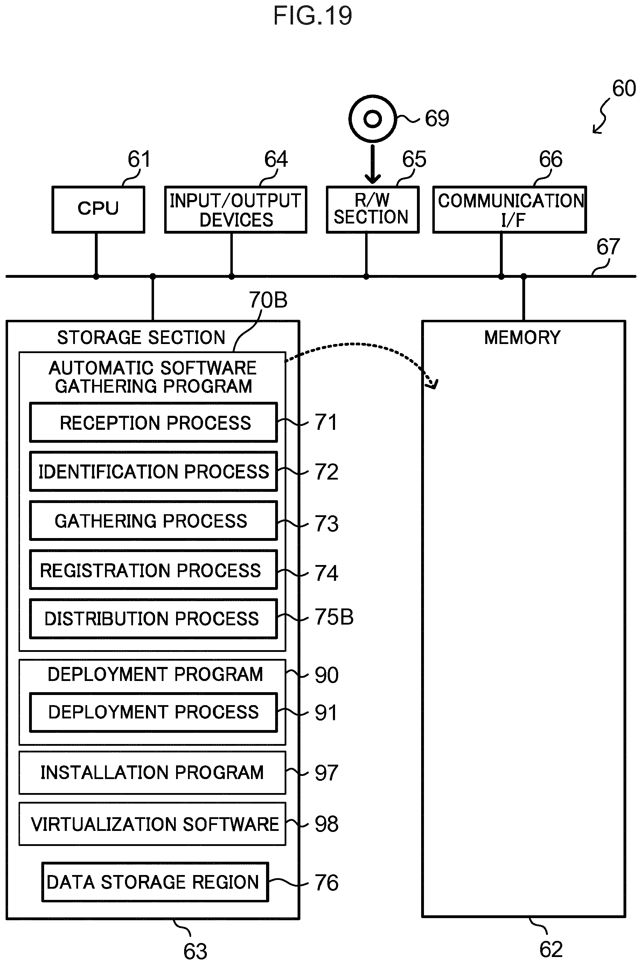

The automatic software gathering device 10B may, for example, be implemented by the computer 60 illustrated in Fig. 19. An automatic software gathering program 70B, a deployment program 90, an installation program 97, and virtualization software 98 for causing the computer 60 to function as the automatic software gathering device 10B are stored in the storage section 63, which serves as a storage medium. The automatic software gathering program 70B includes the reception process 71, the identification process 72, the gathering process 73, the registration process 74, and a distribution process 75B. Moreover, the storage section 63 includes the data storage region 76. The virtual servers 20B are constructed on the computer 60 by the virtualization software 98. The deployment program 90 executes on each of the virtual servers 20B and functions as the deployment section 21 illustrated in Fig. 18. The installation program 97 is executed by each guest OS 30B and functions as the installation execution section 31.

The functionality implemented by the automatic software gathering program 70B may, for example, be implemented by a semiconductor integrated circuit, and more specifically, may be implemented by an ASIC or the like.

The operation of the software collection providing system 100B according to the second exemplary embodiment differs from the operation of the first exemplary embodiment only in that the target of information exchange is different, and explanation of other points is therefore omitted.

More specifically, exchange of information between the distribution section 15A and each of the installation servers 20A in the software collection providing system 100A of the first exemplary embodiment is different from exchange of information between the distribution section 15B and each of the virtual servers 20B in the second exemplary embodiment. Moreover, exchange of information between the installation servers 20A and the target machines 30A in the first exemplary embodiment is different from exchange of information between the virtual servers 20B and the guest OSes 30B in the second exemplary embodiment. Moreover, although the customer accesses the installation servers 20A from the user terminal 48 by operating the target machine 30A in the first exemplary embodiment, the virtual servers 20B are accessed from the user terminal 48 by operating the virtual machine that runs the guest OS 30B in the second exemplary embodiment.

Note that instead of the supplementary software for the target machine 30A being gathered as the related software in the first exemplary embodiment, related software related to the virtual machine that runs the guest OS 30B may be gathered in the second exemplary embodiment.

Although explanation has been given above regarding a mode in which the automatic software gathering program 70A, 70B and the deployment program 90 is pre-stored (installed) on the storage section 63, 83 above, there is no limitation thereto. Programs of technology disclosed herein may be provided in a mode recorded on a recording medium such as a CD-ROM, a DVD-ROM, or USB memory.

According to technology disclosed herein, one aspect enables gathering of software employed in system construction to be made more efficient.

## Claims

1. An automatic software gathering program (70A, 70B) that accords with a setup order, and that is executable to cause a computer to perform a process, the process comprising:
receiving (71) setup order information (16) related to a specific system construction;
identifying (72) respective software items of a setup target included in the setup order information;
referencing a first storage section (43) storing software and storage areas, accessing a storage area of each identified software item of the setup target, and gathering (73) each software item of the setup target; and
storing (74) each of the gathered software items in a second storage section (17) as a software group employed during the specific system construction.

2. The automatic software gathering program of claim 1, wherein, in the process:
the setup order information includes site information; and
the software group is stored in association with the site information.

3. The automatic software gathering program of claim 2, the process further comprising:
in response to access from a site identified by the site information, permitting distribution to the site of the software group.

4. The automatic software gathering program (90) of claim 1, wherein, in the process:
the setup order information includes site information;
the software group is stored in a management storage region (27n) in association with an identified site corresponding to the site information; and
the process further comprises transmitting (91) one or more software groups stored in the corresponding management storage region to the identified site in response to access from the identified site.

5. The automatic software gathering program of any one of claim 1 to claim 4, wherein:
the setup order information includes a calendar date; and
the process further comprises, prior to gathering each software item of the setup target, checking (72) that a usable start date of each software item of the setup target is earlier than the calendar date.

6. The automatic software gathering program of claim 5, wherein, in the process:
for each software of the setup target, in cases in which a plurality of software that become usable on different dates are present, software corresponding to a date that is earlier than the calendar date and that is a most recent becoming-usable date is gathered (72, 73).

7. The automatic software gathering program of claim 5 or claim 6, wherein
the calendar date is a date at which each software item of the setup target is installable to a target device for the specific system construction.

8. The automatic software gathering program of any one of claim 1 to claim 7, the process further comprising:
prior to gathering each software item of the setup target, checking (73) that each software item of the setup target is not stored in the second storage section.

9. The automatic software gathering program of claim 8, the process further comprising,
prior to gathering each software item of the setup target, checking (73, 74) that software having identical software identifying information is not stored in the second storage section, and that there is no given software stored in the second storage section for which a value obtained by performing a specific transformation on the software is the same as a value obtained by performing a transformation identical to the specific transformation on the given software.

10. The automatic software gathering program of any one of claim 1 to claim 9, wherein the process that the computer is caused to execute further comprises:
identifying (72) each software item of the setup target included in the setup order information, and a date corresponding to each software item of the setup target; and
referencing the first storage section storing software, storage areas, and becoming-usable dates of software, and outputting (72) an alert in cases in which, in the respective software items of the setup target, a calendar date corresponding to a respective software item of the setup target is earlier than a respective becoming-usable date.

11. The automatic software gathering program of any one of claim 1 to claim 10, the process further comprising, in response to access from a target device to be installed with one or more software items included in the software group, providing (75A, 75B, 91) the target device with:
some or all of the software items in the software group based on a install program (27n3) that automatically installs each software item included in the software group in a specific sequence and that is capable of receiving a designation of software to be excluded from automatic installation targets; and
the install program.

12. The automatic software gathering program of claim 11, the process further comprising:
prior to acquiring each software item included in the software group, checking that the software item does not match software already stored in the second storage section.

13. The automatic software gathering program of claim 11 or claim 12, wherein, in the process:
designation of software to be excluded from the automatic installation targets is performed by inputting information identifying software items to be automatic installation targets from among the software items, or by inputting information identifying software items not to be automatic installation targets from among the software items.

14. An automatic software gathering device (10A, 10B) comprising:
a reception section (11) that receives setup order information (16) related to a specific system construction;
an identification section (12) that identifies respective software items of a setup target included in the setup order information;
a gathering section (13) that references a first storage section storing software and storage areas, that accesses a storage area of each identified software item of the setup target, and that gathers each software item of the setup target; and
a storage controller (14) that stores each of the gathered software items in a second storage (17) section as a software group employed during the specific system construction.

15. A automatic software gathering method comprising:
receiving (S11) setup order information (16) related to a specific system construction;
identifying (S16) respective software items of a setup target included in the setup order information;
referencing a first storage section (43) storing software and storage areas, accessing a storage area of each identified software item of the setup target, and gathering (S18) each software item of the setup target; and
by a processor, storing (S21) each of the gathered software items in a second storage section (17) as a software group employed during the specific system construction.
